# EUROPEAN PATENT SPECIFICATION

(11) **EP 3 048 070 B1**
(45) Date of publication and mention of the grant of the patent: **31.01.2018**
(21) Application number: 15153897.2
(22) Date of filing: 05.02.2015
(51) Int. Cl.: B65G 1/14

(54) **System for storage and transportation of industrial products**
System für Lagerung und Transport von industriellen Produkten
Système pour le stockage et le transport de produits industriels

(30) Priority: 22.01.2015 IT TO20150050
(43) Date of publication of application: 27.07.2016
(73) Proprietor: Danieli, Dino, 36070 Castelgomberto (VI) (IT); Laudani, Pietro, 59-700 Boleslawiec (PL)
(72) Inventor: Danieli, Dino, 36070 Castelgomberto (VI) (IT); Laudani, Pietro, 59-700 Boleslawiec (PL)
(74) Representative: Bruni, Giovanni

(56) References cited:
- EP-A1- 0 613 837
- EP-A1- 1 505 010
- EP-A1- 2 724 961

## Description

### Field of the invention

The present invention relates to a new system for storage and transportation of industrial products, in particular but not exclusively of the automotive field, provided with columns with retractable blades.

As it is known, in many industrial activities, during the various steps of the production run, the products, for example pre-mounted elements which are to be used after in the assembly line, are to be stored and very often transported in other place. Therefore, object of the present invention is a system comprising columns of box type with retractable blades, optimized to make easier the products to be moved and stacked, and to be safely transported. Reference is made for example to the automotive industry and to all the industrial productions where it is needed that a great quantity of similar elements is stored and transported. Especially for some type of products, there occurs the problem of a safe storage such that any damage of the same products, in particular if they are fragile and/or flexible, is avoided, but above all the problem of a rapid and efficient storage, by means of ad hoc systems for storing and transporting the products through the storage and transportation systems.

### Prior art

As it is known and very briefly, the technical field of the invention is the one of the storage and transportation of industrial products, generally provided with columns with retractable blades.

At the state of the art, there are known systems for storage of products, provided with columns with retractable blades, which are disadvantageous in that they are not sufficiently robust for the kind of product to be stored or transported and which have no access for suitable maintenance, due to the configuration of the same columns. In particular, maintenance is important above all in case of substitution of one or more blades of the column. The known systems, for example, do not allow the substitution of only the damaged portion (for example one or more blades), but require the substitution of a whole sub-system, which usually comprises also portions which can be still used. Therefore, there is the need of an innovation which allows to overcome the above cited drawbacks. EP 1 505 010 A1 discloses a system according to the preamble of claim 1.

### Summary of the invention

The present invention solves such drawbacks in that it provides a system according to claim 1 with a configuration of the columns with retractable blades, which allow an easy and cheap maintenance of the system thus allowing the products to be stored reliably.

The system for storage and transportation of products in general, object of the present invention, comprises a plurality of columns on which a series of retractable blades is mounted. Said columns comprise a box structure having two side walls and a rear removable wall, which allows an easy maintenance thereof, as claimed. According to the invention, this aim is reached by means of a wall characterized by a shaped or smooth holed net. Thanks holed net. to this particular wall, a technician can remove the single damaged blades comfortably, without compromising the whole structure and without removing the body of the columns, which is an important element since its positioning is not modified thus guaranteeing the exact initial position. In the specific case, there will be substituted only the damaged portions while all the other elements can be recovered.

Other preferred and/or particularly advantageous embodiments of the invention are described according to the features described in the appended, dependent claims.

The columns can be also connected between each other, preferably by means of a framed structure,

which has preferably a parallelepiped configuration in the three directions of space.

Inside, the box structure is arranged for housing a plurality of blades, provided at progressive height, with connection means between said blades, which allow their mutual movement.

Said columns can also work in vertical, horizontal or also oblique position.

### Brief description of the drawings

These and other advantages of the invention will be now described in detail with reference to the appended drawings, in which:

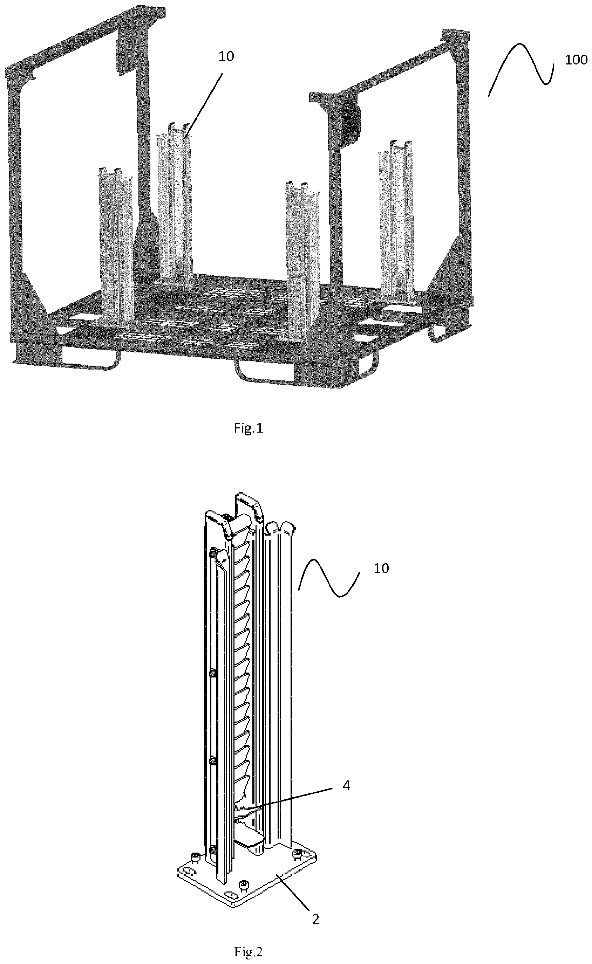

Figure 1 shows an overall axonometric view of the system for storage and transportation of products according to the present invention,
Figure 2 shows an axonometric view of a column of the system of fig. 1;

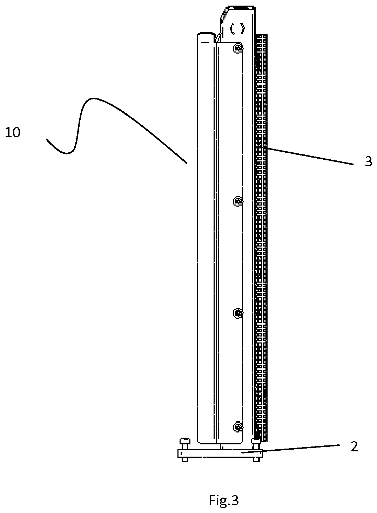

Figure 3 shows a side view of the column of the system of figure 1;

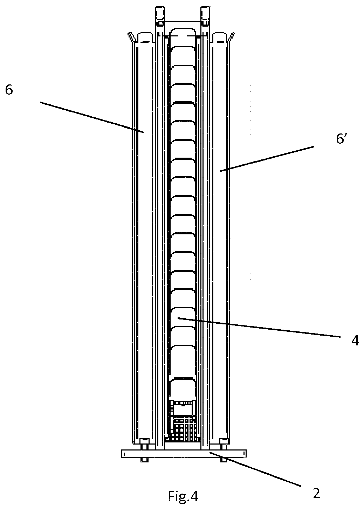

Figure 4 shows a front view of the column of the system of figure 1;
Figure 5 shows an exploded view of the column of the system of figure 1.

### Detailed description

As it is shown in the appended drawings, object of the present invention is a system 100 for storage and transportation of industrial products, comprising at least two columns 10 facing each other. The columns 10 can be connected between each other according to the need and to the kind of product to be stored or transported, by means of a framed structure, which has a preferably parallelepiped configuration in the three directions of space.

Each one of said columns 10 comprises a box structure with nearly square section, made up of two tubular side walls 1, preferably with rectangular section in steel, stainless steel or aluminum, or in some cases with different section, welded to a base plate 2 thus obtaining a structural assembly, thus guaranteeing an optimal torsional resistance without adding other stiffening elements as it occurs typically, and a rear protection wall 3, which is removable, which can be suitably removed and re-positioned to allow an easy maintenance of the same column 10. Said rear wall 3 is a shaped or smooth holed net. The two tubular, side walls 1 are connected by means of a spacer 5 of known length.

Inside the column 10, the box structure is arranged for housing a plurality of blades 4, provided at progressive height, with connection means (of known type and for this reason not shown in the figures) between said blades, which allow their mutual movement.

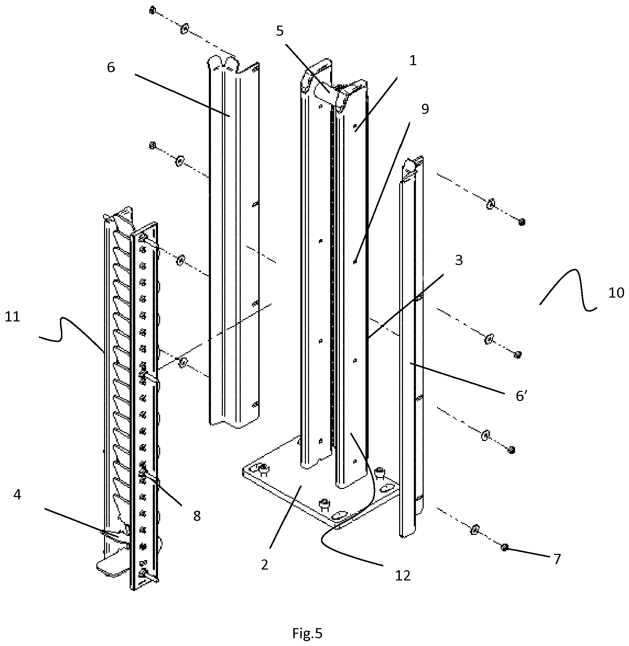

As it is shown in the exploded view of figure 5, on both sides of the two tubular side walls 1 each column 10 is provided with a containment profile 6, 6', connected thereto by means of fastening elements 7.

The blades 4 have a substantially rectangular shape and on the bottom of their rear portion they are provided with a nearly rectangular striking nose: on both sides of said rear portion there are two tongues, of substantially rectangular shape, intended to allow the end of stroke of the blade inside the channel profile 11 housing it, thus defining the working position.

In the rest position of the whole storage structure, all the blades 4 of the column 10 are in vertical position thanks to the action of a counterweight. The weight of a product resting on a blade 4 causes its lowering in horizontal or working position, by stopping the tongues in the end of stroke position and obtaining the next blade to be lowered from the rest position to the working one at the same time. When a product is removed from the storage structure, the blade on which such product was resting, since there is no more weight on said blade, is lifted owing to the counterweight action and it reaches the rest position. The blade immediately above is also brought again in the rest position.

As variant in place of the counterweights in case it is not technically possible to use them, above all in case of reduced distance between the blades, there is used a spring in harmonic stainless steel for blade 4 of the column 10, pre-tensioned when in vertical position of rest. The weight of a product resting on a blade 4 causes its lowering in horizontal or working position thus bringing the spring to increase the torsional charge, by stopping the tongues in the end of stroke position and obtaining the next blade to be lowered from the rest position to the working one at the same time. When a product is removed from the storage structure, the blade on which such product was resting, since there is no more weight on said blade, is lifted owing to the action of return of the spring and it reaches the rest position. The blade 4 immediately above is also brought again in the rest position.

The channel profile 11 which houses the plurality of blades 4 is provided, at constant distance, with a pin 8 for insertion and fastening the same inside corresponding holes 9 of the side walls 1.

Each column 10 can support a series of blades of variable shape according to the need and to the product to be stored and transported, and also the dimension of the same blades 4 is variable.

For the storage system according to the present invention there can be advantageously used stainless steel, or other stainless materials in order to reduce the maintenance at minimum.

## Claims

1. A system (100) for the storage and transportation of industrial products, comprising at least two columns (10) facing each other, each of said columns (10) comprising in turn a box (12) having a square section which has two tubular side walls (1) and a rear wall (3) and is fixed to a base plate (2), **characterized in that** said rear wall (3) is removable to allow an easy system maintenance and **in that** is a shaped or smooth holed net.

2. System (100) according to claim 1 wherein said tubular side walls (1) are connected by means of a spacer (5).

3. System (100) according to one of the claims 1 or 2 wherein said column (10) is provided with a containment profile (6, 6 ') connected to the two tubular side walls (1) by means of fastening elements (7).

4. System (100) according to one of the claims from 1 to 3 wherein said column (10) is arranged for the housing of a channel profile (11) which houses a plurality of blades (4), arranged in a progressive height, by means of connecting means between said blades, which allow the mutual movement of the blades (4) from a rest position to a working position and conversely.

5. System (100) according to claim 4, wherein said blades (4) movement from the working position to the rest position is due to a counterweight.

6. System (100) according to claim 4, wherein said blades (4) movement from the working position to the rest position is due to elastic means.

7. System (100) according to one of the claims from 4 to 6, wherein said channel profile (11) has a pin (8), at constant distance, for its insertion and attachment into corresponding holes (9) of the side walls (1).

## Patentansprüche

1. System (100) zum Lagern und Transportieren von Industrieprodukten, umfassend mindestens zwei einander gegenüberliegende Säulen (10), wobei jede der genannten Säulen (10) wiederum eine Schachtel (12) mit einem quadratischen Querschnitt aufweist, die zwei rohrförmige Seitenwände (1) und eine Rückwand (3) umfasst und an einer Grundplatte (2) befestigt ist, **dadurch gekennzeichnet, dass** die genannte Rückwand (3) entfernt werden kann, um eine einfache Wartung des Systems zu ermöglichen, und dass sie ein Netzwerk mit profilierten oder glatten Löchern ist.

2. System (100) nach Anspruch 1, wobei die genannten rohrförmigen Seitenwände (1) mittels eines Abstandshalters (5) verbunden sind.

3. System (100) nach einem der Ansprüche 1 oder 2, wobei die genannte Säule (10) mit einem Aufnahmeprofil (6, 6') versehen ist, das mit den zwei rohrförmigen Seitenwänden (1) mittels Befestigungselementen (7), verbunden ist.

4. System (100) nach einem der Ansprüche 1 bis 3, wobei die genannte Säule (10) derart angeordnet ist, dass sie ein Kanalprofil (11) aufnimmt, das eine Mehrzahl von Flügeln (4) aufnimmt, die in einer progressiven Höhe angeordnet sind, durch Verbindungsmittel zwischen den genannten Flügeln, die die Hin- und Her-Bewegung der Flügeln (4) von einer Ruheposition in eine Arbeitsposition und umgekehrt ermöglichen.

5. System (100) nach Anspruch 4, wobei die Bewegung der genannten Flügel (4) von der Arbeitsposition in die Ruheposition auf ein Gegengewicht zurückzuführen ist.

6. System (100) nach Anspruch 4, wobei die Bewegung der genannten Flügel (4) von der Arbeitsposition zu der Ruheposition aufgrund elastischer Mittel erfolgt.

7. System (100) nach einem der Ansprüche 4 bis 6, wobei das genannte Kanalprofil (11) einen Stift (8) mit einem konstanten Abstand, für sein Einführen und Befestigen in entsprechenden Löchern (9) der Seitenwände (1), aufweist.

## Revendications

1. Système (100) pour stocker et transporter des produits industriels, comprenant au moins deux colonnes (10) se faisant face, chacune desdites colonnes (10) comprenant à son tour une boîte (12) avec une section carrée qui présente deux parois latérales tubulaires (1) et une paroi arrière (3) et est fixée à une plaque de base (2), **caractérisé en ce que** ladite paroi arrière (3) peut être retirée afin de permettre un entretien facile du système et qu'elle est un réseau muni de trous profilés ou lisses.

2. Système (100) selon la revendication 1, dans lequel lesdites parois latérales tubulaires (1) sont reliées au moyen d'une entretoise (5).

3. Système (100) selon l'une des revendications 1 ou 2, dans lequel ladite colonne (10) est munie d'un profil de confinement (6, 6') relié aux deux parois latérales tubulaires (1) au moyen d'éléments de fixation (7).

4. Système (100) selon l'une des revendications 1 à 3, dans lequel ladite colonne (10) est agencée pour loger un profil de canal (11) qui loge une pluralité d'aubes (4), disposées à une hauteur progressive, par des moyens de liaison entre lesdites aubes, qui permettent le mouvement réciproque des aubes (4) d'une position de repos à une position de travail et vice versa.

5. Système (100) selon la revendication 4, dans lequel ledit déplacement des aubes (4) de la position de travail à la position de repos est dû à un contrepoids.

6. Système (100) selon la revendication 4, dans lequel ledit déplacement des aubes (4) de la position de travail à la position de repos est dû à des moyens élastiques.

7. Système (100) selon l'une des revendications 4 à 6, dans lequel ledit profil de canal (11) comporte une broche (8) à distance constante, pour son insertion et fixation dans des trous correspondants (9) des parois latérales (1).
